# EUROPÄISCHE PATENTSCHRIFT

(11) **EP 0 780 964 B1**
(45) Veröffentlichungstag und Bekanntmachung des Hinweises auf die Patenterteilung: **29.09.2004**
(21) Anmeldenummer: 96119827.2
(22) Anmeldetag: 11.12.1996
(51) Int. Cl.: H02P 6/16, H02K 29/14

(54) **Elektronisch kommutierter Motor**
Electronically commuted motor
Moteur commuté électroniquement

(30) Priorität: 22.12.1995 DE 19548210
(43) Veröffentlichungstag der Anmeldung: 25.06.1997
(73) Patentinhaber: ebm-papst St. Georgen GmbH & Co. KG, 78112 St. Georgen (DE)
(72) Erfinder: Rappenecker, Hermann, Dipl.-Ing., 78147 Vöhrenbach (DE)
(74) Vertreter: Raible, Hans, Dipl.-Ing.

(56) Entgegenhaltungen:
- EP-A- 0 131 632
- EP-A- 0 377 835
- EP-A- 0 485 751
- EP-A- 0 712 002
- US-A- 5 089 733
- PATENT ABSTRACTS OF JAPAN vol. 7, no. 119 (E-177) [1264] , 24.Mai 1983 & JP 58 039257 A (MITSUBISHI DENKI K.K.), 7.März 1983,

## Beschreibung

Die Erfindung betrifft einen elektronisch kommutierten Motor mit mindestens drei Rotorstellungssensoren, welche im Bereich einer vorgegebenen Zone des Rotors angeordnet sind, um im Betrieb entsprechend einer dort vorgesehenen Rotorstellungsinformation digitale Rotorstellungssignale zu erzeugen.

Bei einem solchen Motor mit drei Rotorstellungssensoren kann man die Ausgangssignale der Sensoren sozusagen addieren und erhält dann ein Frequenzsignal, das sich für eine Drehzahlregelung eignet. Dies ist Gegenstand des DE-U-295 16 307.0.

Jedoch hat es sich gezeigt, dass für eine Drehzahlregelung für kleine Drehzahlen, z.B. unter 100 U/min, die Zahl der Impulse pro Zeiteinheit zu klein ist, so dass bei niedrigen Drehzahlen eine gute Regelung nicht mehr möglich ist.

Deshalb ist man bislang gezwungen, an einem Motor für niedrige Drehzahlen einen Zusatz-Impulsgeber vorzusehen, z.B. einen Encoder, eine Lichtschranke, einen Tachogenerator, einen Resolver, etc. Solche Zusatz-Impulsgeber sind recht teuer und eignen sich daher nicht für einfache Antriebsaufgaben, bei denen bestimmte Kostengrenzen nicht überschritten werden dürfen.

Ferner kennt man aus der EP-A1-0 485 751 einen dreiphasigen elektronisch kommutierten Innenläufermotor. Dieser hat einen sechspoligen Innenrotor, an dessen einer Stirnseite eine Bahn mit optischen Markierungen vorgesehen ist, die in reflektierende und absorbierende Segmente aufgeteilt ist und zur Steuerung der Kommutierung des Motors dient. Diese Bahn wird von drei optischen Sensoreinrichtungen abgetastet. Jedem Kommutierungszustand des Motors ist eine vorgegebene Kombination von Signalen dieser Sensoren zugeordnet, welche zusammen eine erste Menge von Kombinationen bilden. An dieser Bahn des Rotors sind - ebenfalls in Form von optischen Markierungen - zusätzliche Hilfsinformationen zur Erzeugung von Drehzahlsignalen vorgesehen. Diese Hilfsinformationen führen bei der Erfassung durch die Rotorstellungssensoren außerhalb der Rotorstellungen, an denen Kommutierungsvorgänge stattfinden, zu Kombinationen von Rotorstellungssignalen, die zusammen eine zweite Menge von Kombinationen bilden, wobei die Schnittmenge von erster und zweiter Menge gleich Null ist. Durch diese Hilfsinformationen entstehen bei der Abtastung durch die Sensoreinrichtungen mehrdeutige Signalkombinationen, die den Start des Motors aus manchen Drehstellungen unzuverlässig oder - in manchen Fällen - unmöglich machen können. Zur Abhilfe wird dort vorgeschlagen, in einem solchen Fall ersatzweise einen Zustand einzuschalten, der eine Vor- oder Rückwärtsdrehung des Motors ermöglicht. Ein sicherer Anlauf ist damit jedoch nicht aus allen denkbaren Drehstellungen gewährleistet, die bei einem solchen Motor beim Start vorkommen können.

Es ist deshalb eine Aufgabe der Erfindung, einen neuen elektronisch kommutierten Motor bereitzustellen.

Nach der Erfindung wird diese Aufgabe gelöst durch einen elektronisch kommutierten Motor gemäß dem Patentanspruch 1. Man erreicht so einen sicheren Anlauf des Motors.

Eine besonders vorteilhafte Weiterbildung der Erfindung ist Gegenstand des Patentanspruchs 3. Es gelingt so in äußerst einfacher Weise und praktisch ohne Mehrkosten, die Frequenz dieses drehzahlproportionalen digitalen Signals zu erhöhen und dadurch den Bereich, in welchem eine Drehzahlregelung noch möglich ist, in Richtung zu tieferen Drehzahlen zu verschieben. Sofern der elektronisch kommutierte Motor durch einen Mikrocontroller oder Mikroprozessor gesteuert wird, entstehen keine Zusatzkosten, da dann die notwendigen Anpassungen in Form eines Programms vorgenommen werden können, welches in diesem Mikrocontroller oder Mikroprozessor gespeichert ist und gewöhnlich bereits vom Hersteller in diesen integriert wird.

In Weiterbildung der Erfindung geht man mit Vorteil so vor, dass pro Rotorpol eine solche Hilfsinformation vorgesehen ist, wobei man zweckmäßig die Hilfsinformation jeweils während einer Rotordrehung von etwa 20° el. wirken lässt.

Ebenso ist es in sehr vorteilhafter Weise möglich, pro Rotorpol zwei solche Hilfsinformationen vorzusehen, welche bevorzugt mit einem Mittelbereich des betreffenden Rotorpols zusammenfallen, der nicht größer als 60° el. ist. Dabei sind mit Vorteil die Hilfsinformationen jeweils während einer Rotordrehung von etwa 12° el. wirksam, und der Abstand der beiden Hilfsinformationen im Bereich eines Pols beträgt ebenfalls bevorzugt etwa 12° el.

Sofern dies von der Größe des Motors her möglich ist, kann man mit großem Vorteil pro Rotorpol in einem Mittelbereich dieses Pols, welcher 60° el. nicht überschreitet, N Abschnitte mit Hilfsinformationen vorsehen, deren Winkelerstreckung und Abstand jeweils etwa 60° el./(2 N +1) beträgt, wobei man mit Vorteil diese N Abschnitte mit ihren Hilfsinformationen jeweils im wesentlichen symmetrisch zur betreffenden Polmitte anordnet.

Eine sehr einfache Ausgestaltung ergibt sich ferner, wenn man die an der vorgegebenen Zone des Rotors vorgesehenen Informationen in Form eines Magnetisierungsmusters im Rotormagneten ausbildet, da dann diese Informationen sehr einfach durch galvanomagnetische Sensoren abgetastet werden können, z.B. durch Hallgeneratoren oder Hall-ICs

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Unteransprüchen.

Es zeigt:
- Fig. 1: ein Übersichtsschaltbild eines erfindungsgemäßen Motors, hier eines dreisträngigen, sechspulsigen Motors 30,
- Fig. 2: eine schematische Darstellung der beim Motor der Fig. 1 verwendeten Endstufe in Form einer Vollbrückenschaltung,
- Fig. 3: Schaubilder zur Erläuterung von Fig. 1 und 2,
- Fig. 4: eine Darstellung der Anschlüsse des Mikroprozessors, der beim Ausführungsbeispiel gemäß Fig. 1 bis 3 verwendet wird,
- Fig. 5: Diagramme zur Erläuterung der Wirkungsweise des Motors nach den vorhergehenden Figuren,
- Fig. 6: Diagramme analog Fig. 5 zur Erläuterung des Ausführungsbeispiels nach den Fig. 7 bis 9,
- Fig. 7, 8 und 9: Darstellungen des Rotors und seiner Sensorspur beim Motor nach den vorhergehenden Figuren; die Sensorspur ist zur Erzeugung eines Drehzahlsignals erhöhter Frequenz modifiziert,
- Fig. 10: eine zweite Variante der Ausgestaltung der Sensorspur, mit der die Frequenz des Drehzahlsignals weiter erhöht werden kann,
- Fig. 11: Diagramme zur Erläuterung der Wirkungsweise von Fig. 10,
- Fig. 12: Schaubilder und ein Diagramm zur Erläuterung der Arbeitsweise des Motors in der Modifikation der Fig. 6 bis 9 bzw. der Fig. 10 und 11,
- Fig. 13: ein Übersichts-Flußdiagramm zur Erläuterung der Arbeitsweise der Erfindung,
- Fig. 14 und 15: Darstellungen zur Erläuterung des Programmschritts S120 der Fig. 13,
- Fig. 16: eine Darstellung zur Erläuterung der Kommutierung des Motors beim Flußdiagramm der Fig. 13,
- Fig. 17: Einzelheiten zum Aufbau des Flußdiagramms der Fig. 16, und
- Fig. 18: und 19 Diagramme zur Erläuterung des Begriffs der Schnittmenge.

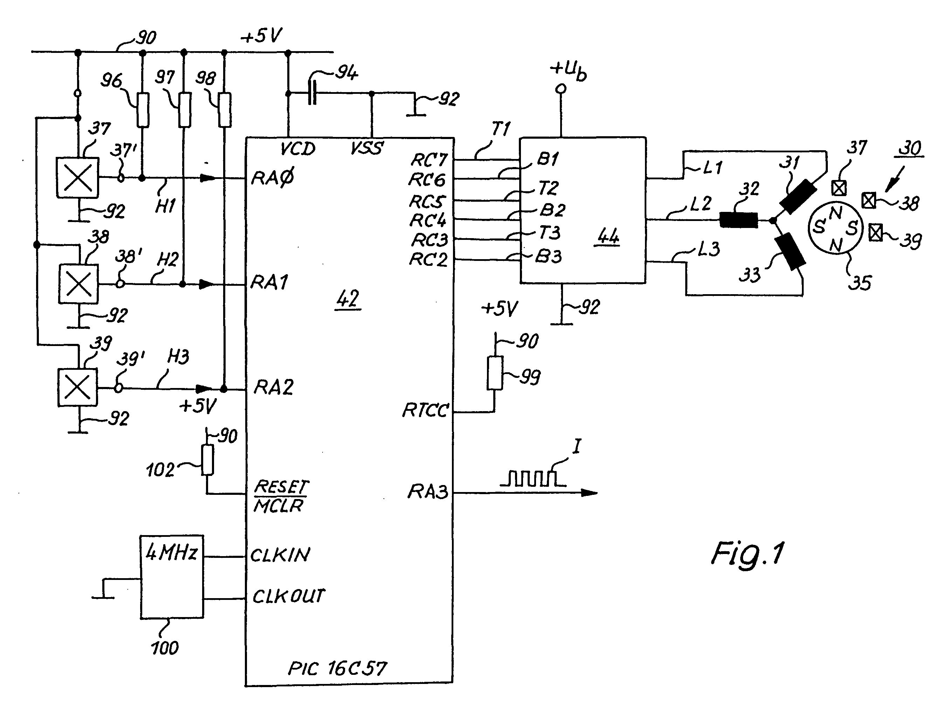

**Fig. 1** zeigt schematisch einen dreisträngigen elektronisch kommutierten Motor 30. Dieser hat eine Statorwicklung mit drei Strängen 31, 32, 33, deren Anschlüsse mit L1, L2 und L3 bezeichnet sind. Diese drei Stränge, oft auch als Phasen bezeichnet, sind hier im Stern geschaltet, könnten aber auch im Dreieck geschaltet sein. Der permanentmagnetische Rotor des Motors 30 ist symbolisch bei 35 angedeutet, und um ihn herum sind am Stator drei Rotorstellungssensoren 37, 38 und 39 mit Abständen von 120° el. angeordnet. (Da der dargestellte Rotor 35 vierpolig ist, entsprechen 120° el. einem Winkel von 60° mech.). Diese Sensoren, gewöhnlich Hall-ICs, sind in Fig. 1 auch auf der linken Seite nochmals dargestellt. Sie liefern im Betrieb Signale H1, H2 bzw. H3.

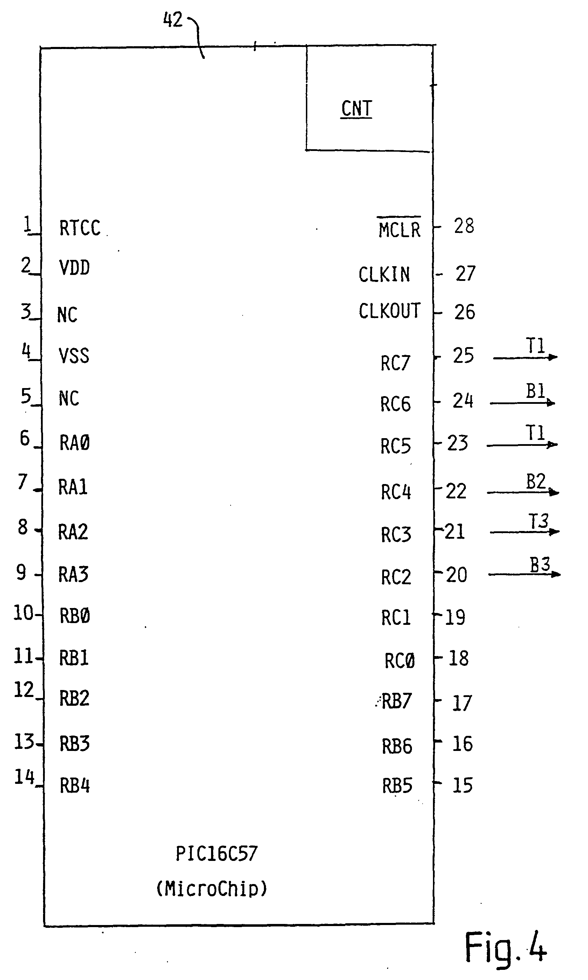

Diese Signale werden entsprechenden Eingängen eines Mikroprozessors 42 zugeführt, welcher Signale T1, B1, T2, B2, T3, B3 abgibt, die einer Vollbrückenschaltung 44 zugeführt werden, an welche die Anschlüsse L1, L2 und L3 der Wicklungen 31, 32 bzw. 33 angeschlossen sind. Die Anschlüsse des Mikroprozessors 42 vom Typ PIC16C57 der Firma MicroChip® sind in Fig. 4 dargestellt und werden deshalb nicht nochmals beschrieben.

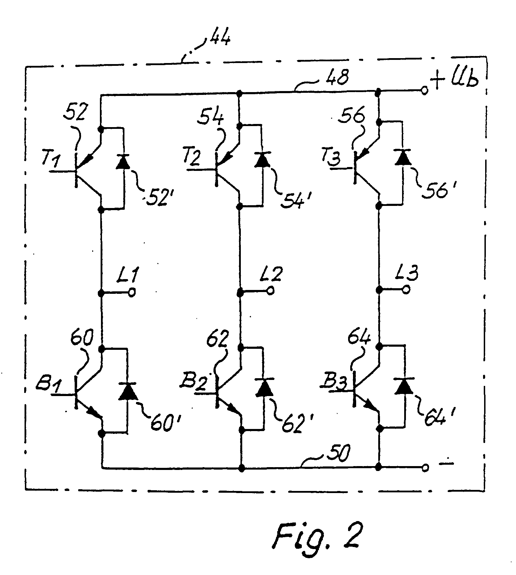

**Fig. 2** zeigt in prinzipieller Darstellungsweise den Aufbau der Brückenschaltung 44 mit bipolaren Transistoren. Naturgemäß könnten hier in gleicher Weise MOSFETs, Darlingtontransistoren etc. verwendet werden, z.B. nach der DE4223208A1 (D179). Eine Plusleitung mit dem Potential + U_{b} (z.B. +24 V) ist mit 48 bezeichnet; eine Minusleitung mit dem Potential 0 V (GND) ist mit 50 bezeichnet. Die drei oberen Brückentransistoren 52, 54 und 56 sind pnp-Transistoren, und zu jedem ist in der dargestellten Weise eine Freilaufdiode 52', 54' bzw. 56' antiparallel geschaltet. Der Emitter ist jeweils mit der Plusleitung 48 verbunden, der Kollektor mit den Ausgängen L1 bzw. L2 bzw. L3. An der Basis erhalten diese drei oberen Transistoren vom Mikroprozessor 42 die Signale T1, T2 bzw. T3.

Die unteren Brückentransistoren 60, 62, 64 sind npn-Transistoren. Ihre Emitter sind mit der Minusleitung 50 verbunden, ihre Kollektoren mit den Ausgängen L1, L2, L3, und zu jedem ist eine Freilaufdiode 60', 62', 64' antiparallel geschaltet. An der Basis erhalten diese unteren Transistoren vom Mikroprozessor 42 die Signale B1, B2 bzw. B3.

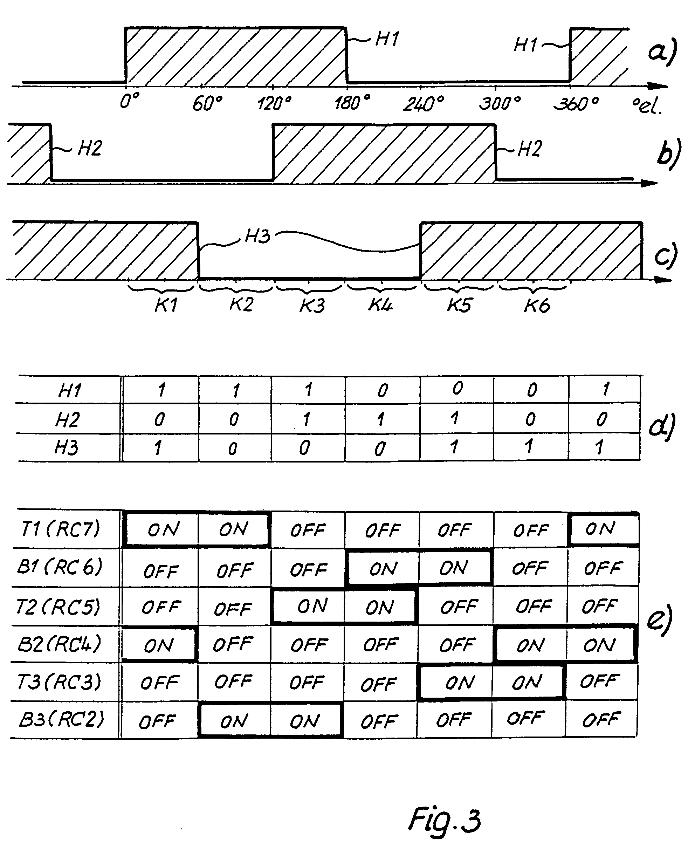

Die **Fig. 3a, 3b und 3c** zeigen drei Sensorsignale H1, H2, H3, die jeweils um 120° el. gegeneinander versetzt sind. Die Bezifferung ist so gewählt, daß H1 beim Winkel 0° el. von "0" auf "1" geht, bei 180° el. von "1" auf "0", und bei 360° el. wieder von "0" auf "1", d.h. wenn sich der Rotor 35 um 360° el. dreht, ergeben sich die Signale gemäß Fig. 3a, 3b und 3c. Die Funktion dieser Signale ist, dem Mikroprozessor 42 die Information zu liefern, in welcher Drehstellung sich der Rotor 35 im Augenblick befindet.

Diese Information über die Drehstellung ist nur grob, denn der Mikroprozessor 42 benötigt nur diese grobe Information, d.h. er muß wissen:

Befindet sich der Rotor 35 in der Drehstellung von 1° bis 60° el.? Dieser Stellungsbereich ist in Fig. 3c mit K1 bezeichnet.

Oder befindet sich der Rotor 35 in der Drehstellung von 61 bis 120° el.? Dieser Drehstellungsbereich ist in Fig. 3c mit K2 bezeichnet.

Oder befindet sich der Rotor 35 in der Drehstellung von 121 bis 180° el.? Dieser Drehstellungsbereich ist in Fig. 3c mit K3 bezeichnet.

Oder befindet sich der Rotor 35 in der Drehstellung von 181 bis 240° el.? Dieser Drehstellungsbereich ist in Fig. 3c mit K4 bezeichnet.

Oder befindet sich sich der Rotor 35 in der Drehstellung von 241 bis 300° el.? Dieser Bereich ist in Fig. 3c mit K5 bezeichnet.

Oder befindet sich der Rotor 35 in der Drehstellung von 301 bis 360° el.? Dieser Bereich ist in Fig. 3c mit K6 bezeichnet.

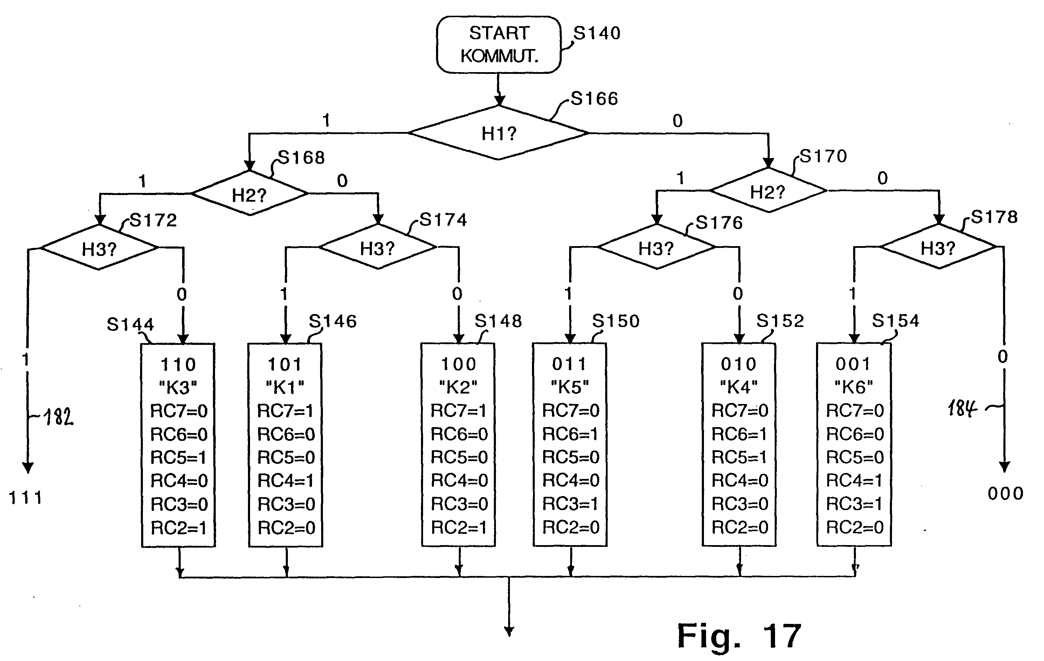

Für den Drehstellungsbereich K1 liefern bei einem üblichen Motor dieser Bauart die drei Sensoren die Signalkombination H1, H2, H3 = 101, wie in Fig. 3d dargestellt, und diese Signalkombination, die deshalb ebenfalls mit K1 bezeichnet wird, weil sie nämlich den Kommutierungszustand für diesen Drehstellungsbereich vorgibt, bewirkt gemäß Fig. 3e bzw. S146 von Fig. 17, daß die Ausgänge RC7 und RC4 des Mikroprozessors 42, also die Signale T1 und B2, hoch werden, d.h. daß in der Brückenschaltung 44 die Transistoren 52 und 62 eingeschaltet werden, so daß von der Plusleitung 48 über den Transistor 52, die Stränge 31 und 32, und den Transistor 62 ein Strom zur Minusleitung 50 fließt. Die Ausgänge RC6, RC5, RC3 und RC2 des Mikroprozessors 42 sind in diesem Fall niedrig, weshalb die übrigen Brückentransistoren gesperrt sind.

Im anschließenden Drehwinkelbereich K2 von 61 bis 120° el. lautet die Rotorstellungsinformation H1, H2, H3 = 100, und sie bewirkt,daß die Ausgänge RC7 und RC2, also die Signale T1 und B3, hoch werden, wodurch die Transistoren 52 und 64 eingeschaltet werden und ein Strom über den Strang 31 und den Strang 33 von der Plusleitung 48 zur Minusleitung 50 fließt, vgl. S148 in Fig. 17.

Bei diesem Beispiel wird also jeweils nach einer Rotordrehung von 60° el. die Brückenschaltung 44 von einem Kommutierungszustand zu einem darauffolgenden Kommutierungszustand umgeschaltet. Diese Umschaltung wird als "Kommutierung" bezeichnet. Ihr Zweck ist, den Strom zu den drei Strängen 31, 32, 33 des Motors 30 so zu steuern, daß das von der Statorwicklung erzeugte Magnetfeld immer um einen gewissen Winkel dem Feld des permanentmagnetischen Rotors 35 vorausläuft und diesen daher in der gewünschten Richtung "nach vorne zieht", also antreibt. Sofern sich der Rotor 35 in der entgegengesetzten Richtung bewegen soll, müssen naturgemäß die Signalkombinationen K1, K2 etc. in einer anderen Reihenfolge aufeinander folgen. Dies ist für den Fachmann selbstverständlich und daher nicht dargestellt.

Die Erfindung beruht auf der Überlegung, daß das System mit drei Sensoren 37, 38, 39 in diesem Fall eine gewisse Redundanz hat, d.h. eine Kombination von drei Sensoren mit binärem Ausgang kann 2³ = 8 Signalkombinationen K1 bis K8 liefern, von denen hier nur die Kombinationen K1 bis K6 für die Steuerung der Kommutierungszustände des Motors 30 ausgenutzt werden. Man hat also noch die Kombinationen K7 und K8 frei, nämlich beim Ausführungsbeispiel die Kombinationen 000 und 111.

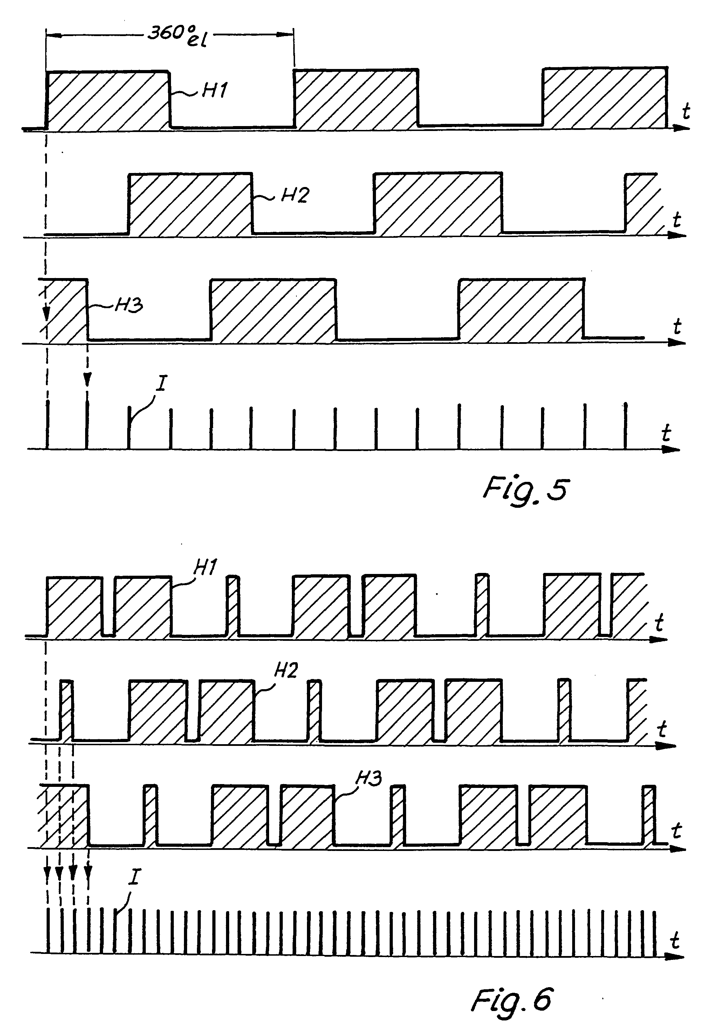

Wie **Fig. 5** zeigt, kann man aus drei um 120° el. gegeneinander versetzten Hallsignalen H1, H2 und H3 pro 360° el. sechs Impulse I (z.B. für eine Drehzahlregelung) ableiten, wenn man jeweils bei der ansteigenden (positiven) und bei der abfallenden (negativen) Flanke eines Hallsignals einen Impuls I erzeugt. Dies ist bekannt und wird zur Drehzahlregelung solcher Motoren verwendet.

Sofern man aber einen solchen Motor bei niedrigen Drehzahlen verwenden will, z.B. unter 100 U/min, reicht die Frequenz der so erzeugten Impulse nicht aus, und man muß dann einen separaten Tachogenerator verwenden, der oft drei bis vier Mal teurer ist als der eigentliche Motor.

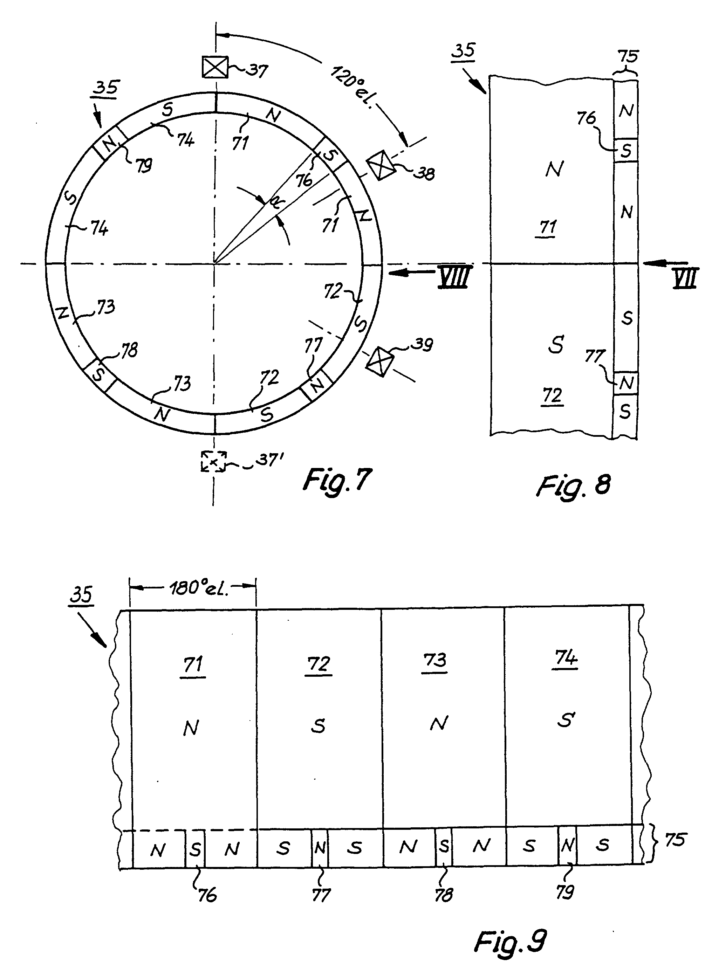

Die **Fig. 6 bis 9** betreffen eine bevorzugte Ausführungsform der Erfindung. Die Fig. 7 bis 9 zeigen einen vierpoligen Rotor 35 in stark schematisierter Darstellung. Die vier Hauptpole 71, 72, 73 und 74 haben jeweils eine Erstreckung von 90° mech. = 180° el. und sind in der üblichen Weise alternierend magnetisiert, gewöhnlich mit einer trapezförmigen oder rechteckförmigen Magnetisierung. Die Pole 71 und 73 sind Nordpole, die Pole 72 und 74 Südpole.

Der Rotor 35 hat eine sogenannte Sensorspur 75, neben der die drei Hall-ICs 37, 38, 39 mit Winkelabständen von 120° el. angeordnet sind, wie in Fig. 7 schematisch angedeutet. Ersichtlich könnte der Sensor 37 auch an der Stelle 37' angeordnet sein, also diametral gegenüber, und dasselbe gilt für die beiden anderen Sensoren 38 und 39, d.h. die gezeigte Anordnung der Sensoren ist nur beispielhaft. Weitere Variationsmöglichkeiten werden nachfolgend beschrieben.

Die Sensorspur 75 ist mit Hilfspolen versehen, d.h. in der Mitte des Nordpols 71 befindet sich - in der Sensorspur 75 - ein schmaler Südpol 76 mit einer Winkelerstreckung α von bevorzugt 20° el.

Analog befindet sich im Südpol 72 ein Hilfspol 77 in Form eines Nordpols, ebenfalls mit der Winkelerstreckung α. Im Nordpol 73 befindet sich ein Südpol 78, und im Südpol 74 ein Nordpol 79, alle ebenfalls nur in der Sensorspur und mit der Winkelerstreckung α. Die Zeichnung zeigt dies völlig klar.

**Fig. 6** zeigt die zugehörigen Hallsignale H1, H2 und H3 in einer Darstellung analog Fig. 5, um eine gute Vergleichbarkeit zu geben. Diese Hallsignale ergeben jetzt in Kombination auch die bereits erwähnten Zusatzinformationen K7 und K8, was nachfolgend noch näher erläutert wird, und man erhält hierdurch eine Verdreifachung der Frequenz der Impulse I, d.h. pro Drehung von 360° el. liefert ein solches System 18 Impulse I, wenn jeweils die positiven und negativen Flanken der Signale H1, H2 und H3 ausgewertet werden. Dadurch gelingt es in vielen Fällen, einen Tachogenerator oder Resolver einzusparen, da diese erhöhte Frequenz der für die Drehzahlmessung verwendeten Impulse I für den Regelvorgang bei der betreffenden Drehzahl noch ausreicht. Geregelte Antriebe für niedrige Drehzahlen können so verbilligt werden.

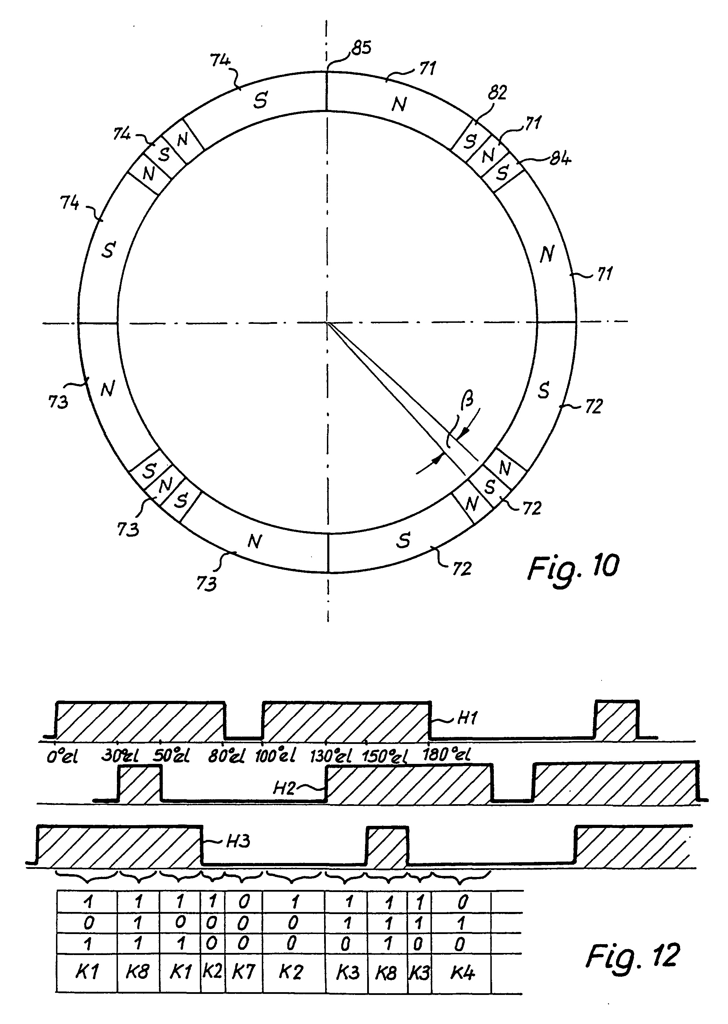

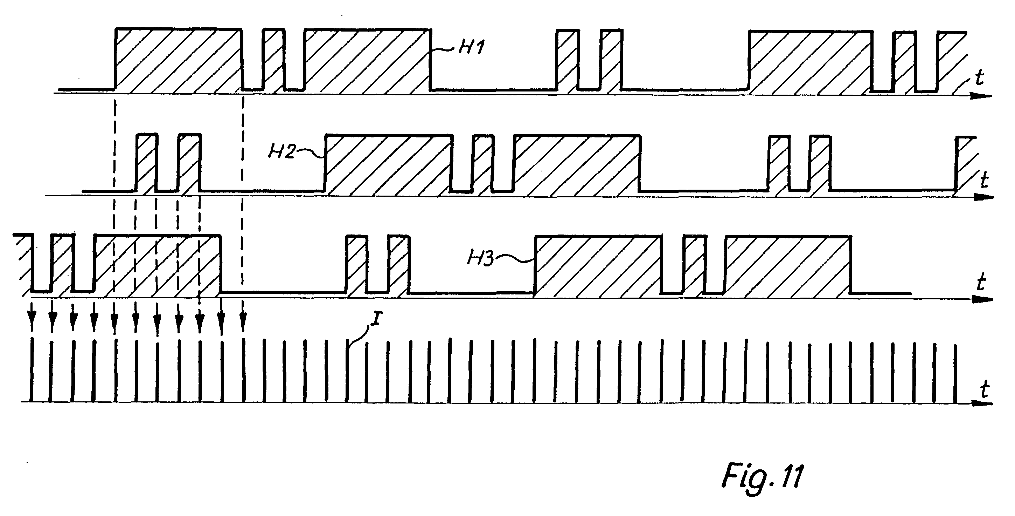

Eine weitere Erhöhung der Impulsfrequenz ist mit der Variante gemäß **Fig. 10 und 11** möglich.

In diesem Fall sind pro Rotorpol zwei Hilfspole vorgesehen, und zwar im mittleren Drittel eines jeden Pols, und symmetrisch zu diesem, vgl. Fig. 10.

Die Hauptpole 71 bis 74 sind mit denselben Bezugszeichen bezeichnet wie in den Fig. 7 bis 9. - Ausgehend von der Winkelstellung 85 der Fig. 10, der dortigen 12-Uhr-Stellung, und im Uhrzeigersinn von dort weitergehend, kommt hier zunächst ein Nordpol-Hauptpolbereich 71 mit einer Erstreckung von 75° el. = 37,5° mech., anschließend ein Südpol-Hilfspol 82 mit β = 12° el., anschließend wieder der Nordpol-Hauptpol 71 mit β = 12° el., anschließend ein Südpol-Hilfspol 84 mit β = 12° el., und anschließend der Rest des Nordpol-Hauptpols 71 mit 75° el.

Dasselbe Muster wiederholt sich in der dargestellten Weise bei den drei anderen Hauptpolen 72, 73 und 74.

**Fig. 11** zeigt die Form der bei Fig. 10 erzeugten Hallsignale H1, H2, H3 und der Impulse I, welche sich in der dargestellten Weise aus den Flanken dieser Hallsignale ergeben. Pro Drehung von 360° el. ergeben sich hier 30 Impulse I, d.h. gegenüber Fig. 5 erhält man die fünffache Zahl der Impulse I. Dies bedeutet, daß man bei der zu regelnden Drehzahl etwa 1/5 des bisherigen Werts erreichen kann, d.h. wenn man mit den Impulsen I gemäß Fig. 5 noch eine Drehzahl von 200 U/min regeln kann, sind es mit den Impulsen nach Fig. 11 40 U/min.

In Fig. 1 ist der Mikroprozessor 42 mit seinem Eingang VDD an eine geregelte Gleichspannung von + 5 V angeschlossen (Plusleitung 90), und mit seinem Eingang VSS an Masse 92. Zwischen VDD und VSS liegt ein Siebkondensator 94 (z.B. 100 nF) zum Ausfiltern von Störimpulsen.

Die Hall-ICs 37, 38 und 39 sind in der dargestellten Weise zwischen der Plusleitung 90 und Masse 92 angeschlossen. Da sie open-collector-Ausgänge 37', 38', 39' haben, sind diese Ausgänge über Pullup-Widerstände 96, 97, 98 (z.B. je 10 kΩ) mit der Plusleitung 90 verbunden, außerdem direkt mit den Ports RAØ, RA1 bzw. RA2 des Mikroprozessors 42. Der Port RTCC ist über einen Widerstand 99 (z.B. 10 kΩ) an die Plusleitung 90 gelegt.

Ein 4 MHz-Resonator 100 ist an die Eingänge CLKIN und CLKOUT angeschlossen und dient als Taktgeber. Ein Port MCLR/ (Reseteingang) ist über einen Widerstand 102 (z.B. 10 kΩ) mit der Plusleitung 90 verbunden.

Am Port RA3 treten im Betrieb die drehzahlproportionalen Impulse I auf. Diese werden erzeugt, indem der Port RA3 abwechselnd auf hoch und niedrig geschaltet wird. Dies wird nachstehend erläutert.

Die nicht belegten Ports des Mikroprozessors 42 können frei sein und werden dann zweckmäßig über einen Widerstand (10 kΩ) mit der Plusleitung 90 verbunden. Sie könnten auch für eine Drehzahlregelung gemäß der deutschen Patentanmeldung 19545109.0 vom 4.12.1995 (D199 = DE-3023) verwendet werden.

Die Erfindung läßt sich auf höhere Impulszahlen erweitern, doch ergibt sich eine Grenze, weil dann die Hilfspole sehr schmal werden und schwierig zu magnetisieren sind. Dies hängt auch vom verwendeten Magnetmaterial ab, ebenso vom Durchmesser des Rotors, d.h. ein Rotor mit großem Durchmesser erlaubt die Verwendung einer größeren Zahl von Hilfspolen.

Die Hilfspole werden zweckmäßig symmetrisch und im zentralen Drittel der Hauptpole angordnet, wobei ihre Breite und der Winkelabstand jeweils 60° el./(2N+1) betragen, wobei N die Zahl der Hilfspole pro Hauptpol ist.

### Beispiele

Bei Fig. 6 bis 8 ist N = 1, und die Breite α der Hilfspole 76 bis 79 ist deshalb 60° el./3 = 20° el.

Bei Fig. 10 ist N = 2, und die Breite β der Hilfspole 82, 84 und ihr Abstand ist 12° el.

Analog wären für N = 3 die Breite und der Abstand 8,6° el.

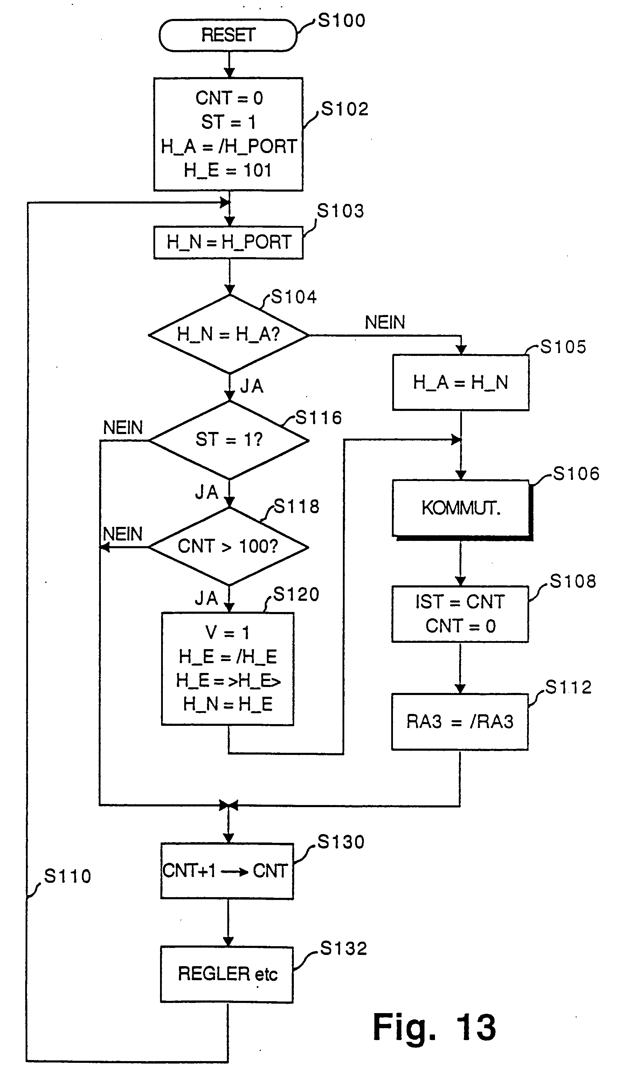

**Fig. 12** zeigt nochmals den Fall von Fig. 5, also die Sensorspur 75 mit einem Hilfspol pro Hauptpol, und die zugehörigen Signalkombinationen K1 ... K8.

Z.B. ergibt sich zwischen 0° el. und 30° el. die Signalkombination K1, zwischen 30 und 50° el. K8, zwischen 50 und 70° el. wieder K1, zwischen 70 und 80° el. K2, zwischen 80 und 100° el. K7, etc., wie in Fig. 12 explizit dargestellt.

Von diesen Kombinationen sind, wie erläutert, die Kombinationen K7 und K8 für die Steuerung des Motors ohne Relevanz, d.h. wenn der Rotor 35 z.B. in der Stellung 40° el. stehenbleibt, erhält seine Elektronik die Signalkombination K8=111, und die Elektronik "weiß" folglich nicht, an welcher Stelle sich der Rotor befindet, denn die identische Kombination K8 tritt auch zwischen 150 und 170° el. auf, ebenso zwischen 260 und 280° el.. Deshalb wäre ein Start aus diesen Winkelbereichen nicht möglich, ebenso nicht aus den Winkelbereichen mit K7=000. Man kann diese Winkelbereiche für die Kommutierungselektronik auch als "Störpole" ansehen, da sie sozusagen das Orientierungsvermögen des Motors stören - dieser weiß dort nicht, in welcher Drehstellung er sich beim Start befindet.

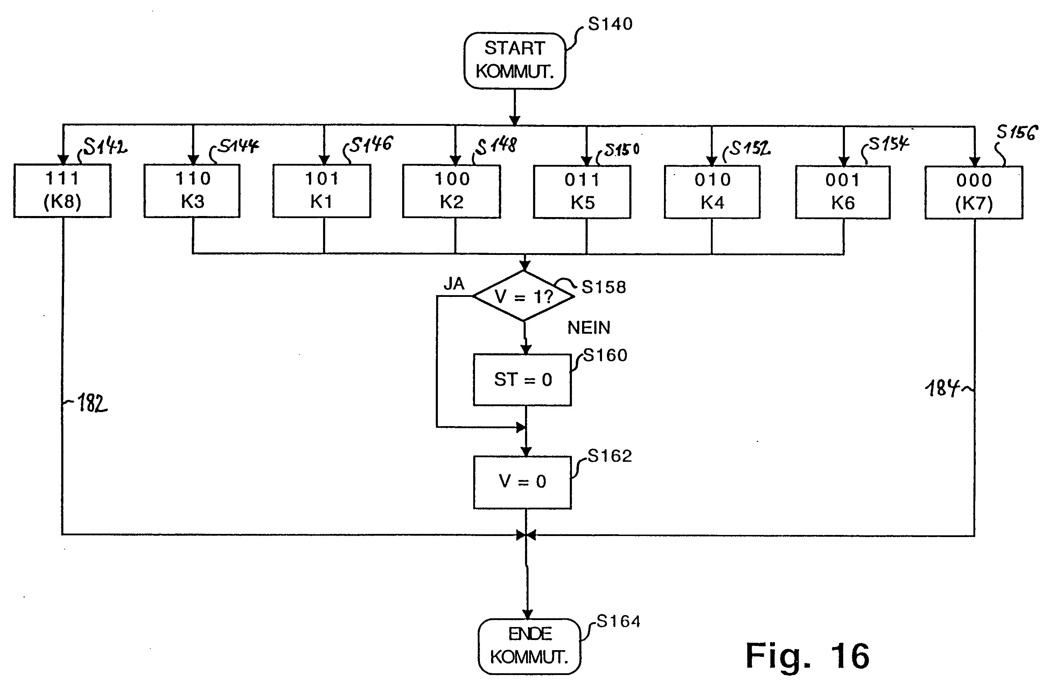

Deshalb enthält der Mikroprozessor 42 in seinem ROM ein Programm, dessen Aufbau (Flußdiagramm) in **Fig. 13** in Übersicht dargestellt ist. Hierbei werden folgende Abkürzungen verwendet:
Register ST = Startregister.
   Wenn dieses gleich "1" ist, ist der Startzyklus des Motors aktiv.
Register V = Register Versuch.
   Wenn dieses Register gesetzt ist, macht das Programm einen Anlaufversuch mit einem Ersatzwert H_E für die Hallsignale, also einer der Signalkombinationen K1 bis K6.
   H_A = Variable Hall-Alt (Zustand der Hallsignale bei der vorhergehenden Speicherung in H_A)
   H_N = Variable Hall-Neu (aktuellster Zustand der Hallsignale)
   H_E = Variable Hall-Ersatz (Ersatzwert für die Hallsignale; verwendet, wenn eine der Signalkombinationen K7 oder K8 vorliegt)
   IST = Istwert für die Drehzahl.
      Dieser Istwert kann für einen Drehzahlregler oder einen Lageregler verwendet werden.
   RA3 = Prozessorport für Ausgabe einer zur Drehzahl proportionalen Frequenz.
   H_PORT = tatsächliche Hallsignale an den Ports RA0, RA1, RA2
   CNT = Schleifenzähler für die Erfassung des Istwerts der Drehzahl.
      Dieser Zähler mißt einen zur Drehzahl N umgekehrt proportionalen Wert a/N.
   KOMMUT = Kommutierung, wie in den Fig. 16 und 17 dargestellt.

Nach dem Einschalten oder nach einem Resetvorgang beginnt das Programm im Schritt S100, und im anschließenden Schritt S102 wird eine Initialisierung vorgenommen. Der Schleifenzähler CNT wird auf Null rückgestellt, das Register ST (für den Anlauf) wird gesetzt. Der Wert H_E wird auf 101 eingestellt, also auf die Signalkombination K1. Der Wert H_A wird mit dem Komplementärwert von H_PORT initialisiert, damit bereits beim ersten Durchlauf der Programm-Modul S106 (Kommutierung des Motors) aufgerufen wird, weil die Bedingung des Schritts 104 nicht erfüllt ist.

Im Schritt S103 werden an den Ports RA0, RA1, RA2 die Signale H1, H2, H3 abgelesen und in der Variablen H_N gespeichert, also z.B. der Wert "010", wenn sich der Rotor 35 in der Stellung 190° el. befindet.

Im Schritt S104 wird die im Schritt S103 neu eingelesene Information H_N verglichen mit der zuletzt (nach der vorhergehenden Änderung) gespeicherten Information H_A über die Hallsignale. Hat sich der Zustand wenigstens eines der Signale H1, H2, H3 an den Ports RA0, RA1, RA2 gegenüber H_A geändert, so geht das Programm zum Schritt S105, wo diese neueste Information in der Variablen H_A gespeichert wird, damit eine neue Änderung eines der Hallsignale sofort beim nächsten Schleifendurchlauf erkannt werden kann.

Im Schritt S106, der nachfolgend anhand der Fig. 16 und 17 näher erläutert wird, werden die Ports RC2 bis RC7 des Mikroprozessors 42 entsprechend dem Wert von H_N eingestellt. Dies geschieht gemäß der Tabelle in Fig. 3d) und e) und wird nachfolgend näher erläutert.

Im Schritt S108 wird der Istwert IST gebildet. Im Zähler CNT (im Mikroprozessor 42) ist die Zahl der Durchläufe durch die Programmschleife S110 gespeichert, die seit der letzten Änderung von H_N gezählt wurde, und bei jeder Änderung von H_N wird dieser Wert von CNT in das Register IST geschoben, und anschließend wird der Zähler CNT auf Null zurückgestellt. Der Wert in IST stellt also ein Maß dar für den zeitlichen Abstand zwischen zwei Impulsen I, gemessen als Zahl von Durchläufen durch die Schleife S110.

Ein solcher Durchlauf durch eine komplette Schleife erfordert, unabhängig vom jeweiligen Weg durch das Programm, eine konstante Zeit, z.B. 50 µs, und bei niedrigen Drehzahlen liegt zwischen zwei Impulsen I eine größere Zahl von solchen Durchläufen, und diese Zahl dient folglich als Maß für die augenblickliche Drehzahl. (Die konstante Zeit für den Schleifendurchlauf, also z.B. 50 µs, wird dadurch erreicht, daß in den Zweigen des Programms, die an sich schneller durchlaufen würden, sogenannte inerte Befehle eingefügt werden, also normalerweise NOP-Befehle, die nur Zeit verbrauchen, aber nichts bewirken.)

Im Schritt S112 wird jedesmal, wenn CNT auf Null zurückgesetzt wird, das Signal am Port RA3 des Mikroprozessors 42 auf seinen Komplementärwert gesetzt, d.h. dieses Signal alterniert zwischen 0 und 1 und ändert bei jedem Impuls I seinen Wert, weshalb man am Port RA3 ein Rechtecksignal mit einem Tastverhältnis von ca. 50% erhält, wie in Fig. 1 dargestellt. Dieses Signal kann z.B. einer Drehzahlanzeige, einer Drehzahlüberwachung, einem Drehzahlregler, oder einem Zähler für eine digitale Lageregelung zugeführt werden, z.B. in einem Schrittmotor.

Falls im Schritt S104 die Antwort Ja ist, sich also keines der Hallsignale geändert hat, geht das Programm zum Schritt S116. Dort wird der Zustand des Registers ST (Start) abgefragt, und wenn dieses den Wert 1 hat, bedeutet dies, daß der Motor noch steht und folglich noch keine Änderung der Hallsignale H1, H2, H3 stattgefunden hat. In diesem Fall geht das Programm weiter zum Schritt S118. Dort wird der Zustand des Schleifenzählers CNT abgefragt, z.B. wie dargestellt, ob dieser den Wert 100 bereits erreicht hat.

Bei einer Schleifendurchlaufzeit von 50 µs bedeuten 100 Schleifendurchläufe eine Zeit von 50 ms, in der sich keine Änderung eines Hallsignals ergeben hat, denn sonst wäre im Schritt S108 der Zähler CNT auf Null zurückgestellt worden. Dies bedeutet also, daß der Motor nach 50 ms immer noch steht, und daß er folglich ein Hallsignal H_N erhält, das einen Anlauf nicht ermöglicht, also eine der Signalkombinationen K7 oder K8, oder eine Kombination, die kein Drehmoment an der Welle erzeugt.

Folglich muß diese Signalkombination geändert werden, und dies geschieht im Schritt S120. Dort wird das Register V gesetzt, um festzuhalten, daß es sich um einen Anlaufversuch handelt. V=0 bedeutet, daß der Motor eine Signalkombination aus der Menge K1 bis K6 erhalten hat. -- Im Schritt S120 wird das Signal H_E, das im Schritt S102 festgelegt worden war, nach einer bestimmten Gesetzmäßigkeit verändert, so daß man ein neues Signal H_E erhält, das in die Variable H_N geladen wird. Mit diesem neuen Wert geht das Programm zum Schritt S106, wo dieser neue Wert gemäß der Tabelle in Fig. 3d) und e) in eine neue Einstellung der Brückenschaltung 44 umgesetzt wird, in der Hoffnung, daß der Motor 30 nun anfangen wird, sich zu drehen.

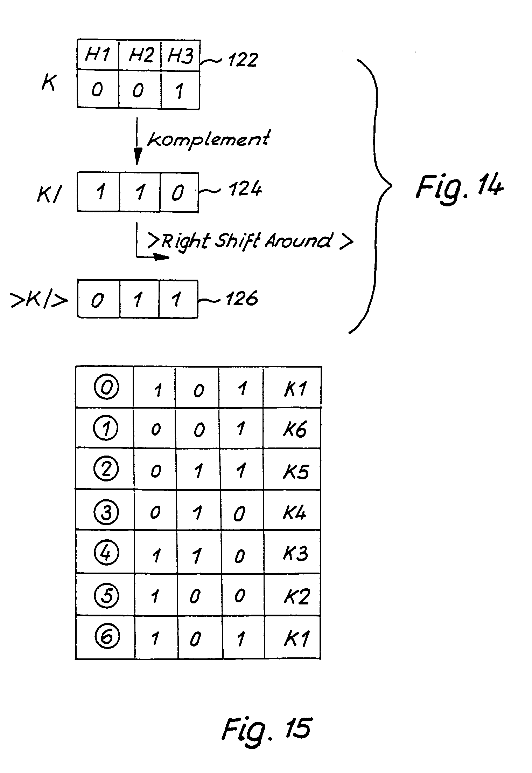

**Fig. 14** zeigt, wie das Signal H_E im Schritt S120 verändert wird. Als Beispiel ist bei 122 ein Signal K mit dem Wert 001 angegeben. Dies entspricht in der Tabelle der Fig. 3 der Signalkombination K6. Zunächst wird in S120 der Komplementärwert K/ dieses Signals K gebildet, also im Beispiel der Wert 110, wie in Fig. 14 bei 124 angegeben. Anschließend wird dieser Wert K/ um eine Stelle nach rechts verschoben, wodurch sich beim Beispiel der Wert 011 ergibt, wie in Fig. 14 bei 126 angegeben. Dies entspricht in der Tabelle der Fig. 3 der Signalkombination K5.

Naturgemäß können die Schritte 124 und 126 auch in umgekehrter Reihenfolge vorgenommen werden, ohne daß sich am Resultat etwas ändert.

**Fig. 15** zeigt, was geschieht wenn der in Schritt S102 vorgegebene Anfangswert H_E = 101, entsprechend der Signalkombination K1, zu wiederholten Malen dieser Prozedur unterworfen wird. Hierdurch ergeben sich nacheinander die Signalkombinationen K6, K5, K4, K3, K2 und am Ende wieder die Signalkombination K1. Auf diese Weise werden also alle für die Kommutierung des Motors 30 möglichen Signalkombinationen durchlaufen, nicht aber die "unmöglichen" Signalkombinationen K7 oder K8. Mit einer dieser Signalkombinationen K1 bis K6 läuft der Motor (sofern er nicht blockert ist) an, wobei er sich u.U. kurzzeitig rückwärts dreht und anschließend in der richtigen Richtung startet, sobald er durch die Drehung eine der "normalen" Signalkombinationen K1... K6 an seinen Hallsensoren 37, 38, 39 erhalten hat.

Im Anschluß an den Schritt S112 der Fig. 13 geht das Programm zum Schritt S130, wo der Schleifenzähler CNT bei jedem Schleifendurchlauf um den Wert 1 erhöht wird. Dies ist ebenso der Fall, wenn beim Schritt S116 das Register ST den Wert 0 hat, oder wenn beim Schritt S118 der Zähler CNT einen Wert zwischen 0 und 100 hat.

Im Anschluß an den Schritt S130 kann im Schritt S132 beispielsweise ein Drehzahlregler vorgesehen sein, wie er Gegenstand der deutschen Patentanmeldung 195 45 109.0 vom 4. Dezember 1995 ist. Jedoch wird in vielen Fällen kein Drehzahlregler benötigt. Im Schritt S132 können auch sonstige Motor-Überwachungsfunktionen durchgeführt werden, wie sie zu einem komplexeren Prozessorprogramm gehören, die jedoch im Rahmen der vorliegenden Erfindung keine Rolle spielen. Anschließend an S132 geht das Programm über S110 zurück zum Schritt S103, d.h. die Programmschleife ist dann nach einem Durchlauf vollendet, wofür sie, wie bereits erläutert, eine konstante Zeit benötigt, z.B. 50 µs. Zur Erzeugung einer solchen konstanten Schleifen-Durchlaufzeit vgl. die EP 0 657 989 A1,insbesondere Fig. 22 und 23.

Als Beispiel seien die Fig. 16 und 17 genannt, wo die Signalwege 182 und 184 weniger Zeit erfordern, weil dort die Schritte S158, 160, 162 nicht durchlaufen werden müssen. Deshalb werden in diesem Fall in die Signalwege 182, 184 entsprechende NOP-Befehle (nicht dargestellt) eingefügt, welche - zusammen mit S142 oder S156 - gleich viel Zeit verbrauchen wie z.B. die Folge der Schritte S154, 158, 160, 162, so daß die Zeit für einen Durchlauf von S140 bis S164 stets dieselbe ist.

Im Schritt S120 wird neben der Bildung eines neuen Signals H_E auch das Register V (Versuch) auf 1 gesetzt, um anzuzeigen, daß ein Startversuch gemacht wird. Dieses Register wird anschließend im Schritt S106 abgefragt, was dort beschrieben wird.

Die Probleme beim Anlauf, verursacht durch die Hilfspole in der Sensorspur 75, können immer nur in engen Winkelbereichen auftreten, z.B. bei Fig. 9 in den vier Winkelbereichen 76, 77, 78 und 79, welche jeweils eine Breite von 20° el. haben. Hat sich der Motor 30 durch eines der Signale H_E um ca. 10° el. in die eine oder andere Richtung bewegt, so erhält er von der Sensorspur 75 ein "normales" Hallsignal, also eine der Signalkombinationen K1 bis K6. Das Register ST wird dann auf 0 gesetzt, und der Anlauf ist vollzogen. In diesem Fall arbeitet dann die Motorlogik ohne die Zusatzschritte S118, S120, da hier im Schritt S116 die Antwort Nein ist.

Wenn also der Motor 30 beim Start in einer der Drehstellungen 76, 77, 78 oder 79 steht, in denen die Hallgeneratoren 37, 38, 39 die Signalkombination K7 oder K8 erzeugen, so daß dem Motor eine Information über seine aktuelle Rotorstellung fehlt, wird zuerst ein Anlauf mit der Signalkombination K6 versucht, die im Schritt S120 erzeugt wird; erfolgt innerhalb von 100 Schleifendurchläufen kein Start, so geht das Programm im Schritt S120 zur Signalkombination K5, versucht erneut während 100 Schleifendurchläufen den Anlauf, geht dann zur Signalkombination K4, versucht erneut während 100 Schleifendurchläufen den Anlauf, geht zur Signalkombination K3, versucht erneut den Anlauf, etc., bis ggf. die ganze Serie der zulässigen Signalkombinationen K6 bis K1 abgearbeitet ist.

Auf diese Weise ergibt sich möglicherweise eine kleine Verzögerung des Anlaufs, die aber in der Praxis keine Rolle spielt. Sobald der Motor angelaufen ist, werden nur die Signalkombinationen K1 bis K6 für die Steuerung seiner Kommutierung berücksichtigt, nicht aber die Signalkombinationen K7 und K8, welche keinen Einfluß auf die Vollbrückenschaltung 44 (Fig. 2) haben.

**Fig. 16** zeigt die Einzelheiten des Programmschritts S106 der Fig. 13, also den Ablauf der Kommutierung. Dieser Programmteil beginnt bei S140, und in den Schritten S142, 144, 146, 148, 150, 152, 154 und 156 wird der Wert der Signalkombination H_N ausgewertet. Wie bereits beschrieben, hat diese acht mögliche Werte K1 bis K8, von denen nur die Werte K1 bis K6 die Steuerung des Motors beeinflussen dürfen. Nur letztere führen deshalb zu S158, wo das in S120 gesetzte Register V abgefragt wird. Hat dieses den Wert V=0, geht das Programm weiter zu S160, wo das Register ST (Start) auf Null rückgesetzt wird. Anschließend geht das Programm zu S162, wo auch das Register V auf Null zurückgesetzt wird. Ist in S158 die Antwort Ja, d.h. V=1, geht das Programm direkt zu S162, wo das Register V rückgestellt wird.

V=0 bedeutet also, daß der Motor eine für seine Kommutierung gültige Signalkombination (aus K1 bis K6) erhalten hat. Sobald eine gültige Signalkombination vorliegt, bei der der Motor läuft, läuft er über die Signalkombinationen K7, K8 hinweg, d.h. der letzte Kommutierungszustand, z.B. K1, bleibt solange gespeichert, bis sich die Signalkombination für einen darauffolgenden Kommutierungszustand ergibt, also z.B. K2.

Da zu einem bestimmten Zeitpunkt immer nur eine der acht möglichen Signalkombinationen K1 bis K8 vorliegen kann, ist zu diesem Zeitpunkt nur einer der Schritte S142 bis S156 möglich. Wenn z.B. die Signalkombination H_N=100 ist, geht das Programm von S140 zu S148 und bewirkt eine Einstellung der Vollbrückenschaltung (Fig. 2) gemäß dieser Signalkombination K2, d.h. gemäß der Tabelle in Fig. 3 erhalten die Ausgangssignale T1 und B3 des Mikroprozessors 42 den Wert "1", und die übrigen Ausgangssignale den Wert "0". Dies bewirkt einen entsprechenden Strom im Motor 30.

Liegt eine der Signalkombinationen 000 (K7) oder 111 (K8) vor, so hat dies keinen Einfluß auf die Kommutierung, sondern das Programm geht in diesem Fall über die Wege 182, 184, die auch in Fig. 17 angegeben sind, direkt zu S164, also dem Ende der Kommutierung. Der Schritt S164 schließt sich bei einem normalen Kommutierungsvorgang an S162 an. Die Drehzahlerkennung erkennt somit eine höhere Frequenz.

**Fig. 17** zeigt, wie die Signalkombinationen K1 bis K8 ermittelt werden. Im Anschluß an S140 erfolgt in S166 eine Abfrage des Bits H1 in der Variablen H_N. Hat dieses den Wert 1, so geht das Programm weiter zum Schritt S168, wo das Bit H2 der Variablen H_N abgefragt wird. Ist die Antwort im Schritt S166 Null, so geht das Programm weiter zu S170, wo ebenfalls dieses Bit H2 abgefragt wird.

In völlig analoger Weise schließen sich an S168 die Schritte S172 und S174 an, wo das Bit für das Hallsignal H3 abgefragt wird, und ebenso an S170 die Schritte S176 und S178, wo ebenfalls das Bit H3 abgefragt wird. Dies ist also die Struktur eines Binärbaums, wobei stets links die Antwort "1" und rechts die Antwort "0" ist.

Am linken Ausgang von S172, also für H3 = 1, erhält man ein Signal, wenn die Signalkombination 111 (K8) vorliegt, die nur zur Drehzahlmessung oder Lageregelung verwendet wird. Am rechten Ausgang von S172 erhält man ein Signal, wenn K3 = 110 vorhanden ist, d.h. dies entspricht S144 der Fig. 16. Dieses Signal führt zu einer entsprechenden Steuerung der Vollbrückenschaltung 44, nämlich zum Einschalten des Transistors 54 (durch RC5 = 1) und des Transistors 64 (durch RC2 = 1). Die übrigen Transistoren bleiben gesperrt.

Ein Signal am linken Ausgang von S174 bedeutet K1 = 101, d.h. dies entspricht dem Schritt S146 der Fig. 16, und folglich werden die Transistoren 52 (durch RC7=1) und 62 (durch RC4=1) der Vollbrückenschaltung 44 eingeschaltet, während die übrigen Transistoren gesperrt bleiben.

Ein Signal am rechten Ausgang von S174 bedeutet K2 = 100, d.h. dies entspricht S148 der Fig. 16, und dies führt dazu, daß die Transistoren 52 (durch RC7=1) und 64 (durch RC2=1) der Vollbrückenschaltung 44 eingeschaltet werden, während die übrigen Transistoren gesperrt bleiben.

In analoger Weise entspricht der linke Ausgang von S176 dem Schritt S150 der Fig. 16, und folglich werden die Transistoren 56 (durch RC3=1) und 60 (durch RC6=1) der Vollbrückenschaltung 44 eingeschaltet. Der rechte Ausgang von S176 entspricht S152 der Fig. 16, und deswegen werden hier die Transistoren 54 (durch RC5=1) und 60 (durch RC6=1) der Brückenschaltung 44 eingeschaltet.

Schließlich entspricht der linke Ausgang von S178 der Signalkombination K6 = 001, also S154 der Fig. 16, und deswegen werden hier die Transistoren 56 (durch RC3=1) und 62 (durch RC4=1) der Brückenschaltung 44 eingeschaltet.

An die Schritte S144 bis S154 schließt sich der Schritt S158 der Fig. 16 an, sowie die weiteren dort dargestellten Programmschritte.

Durch die Verwendung eines Binärbaums gemäß Fig. 17 verhindert man, daß die Signalkombinationen 000 und 111 einen Einfluß auf die Brückenschaltung 44 haben, d.h. diese ändert ihren Kommutierungszustand nur, wenn eine Signalkombination aus der Menge der Signalkombinationen K1 bis K6 durch den Binärbaum der Fig. 17 erfaßt wird. Auf diese Weise arbeitet, wenn der Motor 30 läuft, die Kommutierung exakt in der gewohnten Weise, und die Signalkombinationen 000 und 111 dienen nur dazu, bei ihrem Auftreten den Zähler CNT auf Null zurückzustellen. Hierdurch wird eine höhere Frequenz der Impulse I erreicht, und es wird auch eine ziemlich genaue Lageregelung ermöglicht, z.B. bei der Verwendung des Motors als Schrittmotor.

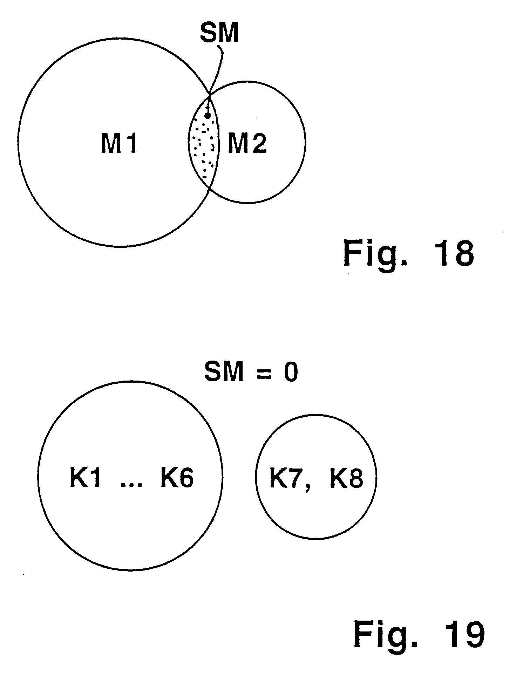

Die **Fig. 18 und 19** erläutern den Begriff der Schnittmenge. Fig. 18 zeigt eine erste Menge M1, z.B. die Zahlen zwischen 1 und 1000, die ganzzahlig durch 2 teilbar sind, und eine zweite Menge M2, z.B. die Zahlen zwischen 1 und 1000, die durch 3 teilbar sind. Die Zahlen 6, 12 etc gehören sowohl M1 wie M2 an und sind daher Teil der Schnittmenge SM.

Fig. 19 zeigt in der linken Menge die Kombinationen K1 bis K6, und in der rechten Menge die Kombinationen K7, K8. Die beiden Mengen haben keine gemeinsamen Mitglieder, und deshalb ist die Schnittmenge gleich Null.

Bei der Erfindung wird also eine Zusatzinformation in diejenigen Signale eingebettet, die vom Motor für seine Steuerung erzeugt werden. Hierdurch entstehen "verbotene" Zustände, die für die Steuerung der Endstufe 44 des Motors nicht ausgewertet werden, sondern nur für die Erzeugung des Istwerts der Motordrehzahl, also des Drehzahlsignals I.

Außer der Drehzahlregelung für langsame Drehzahlen ergibt sich auch die Möglichkeit einer verbesserten Motorpositionierung, denn man erhält eine wesentlich verbesserte Information über die augenblickliche Rotorstellung und kann diese für eine Lagesteuerung nutzen. Dies gilt besonders dort, wo aus Kostengründen die Verwendung von Tachogeneratoren, Resolvern etc. nicht möglich ist. Durch die Erfindung kann man auch in solchen Fällen, und ohne zusätzlichen apparativen Aufwand, eine präzise Regelung bzw. eine präzise Lagesteuerung erreichen.

Das in Fig. 17 dargestellte Prinzip des Binärbaums erlaubt es, jede der möglichen Signalkombinationen K1 bis K8 auszufiltern, d.h. wenn beispielsweise in Fig. 3a das Signal H1 invertiert würde, also von 0° bis 180° el. den Wert 0 und von 180 bis 360° el. den Wert 1 hätte (man müßte dazu in Fig. 7 den Hall-IC 37 um 180° el. nach links oder nach rechts versetzen), so müßten im Schritt S166 die Ausgänge vertauscht werden, also links 0 und rechts 1. In diesem Fall ergäbe sich dann z.B. im Schritt S144 der Wert 010, im Schritt S146 der Wert 001, im Schritt S148 der Wert 000, im Schritt S150 der Wert 111, im Schritt S152 der Wert 110, und im Schritt S154 der Wert 101, d.h. die Steuerung der Kommutierung des Motors müßte dann für diese Werte ausgelegt werden, und für die Generierung des Drehzahlsignals würden die Signale 011 und 100 dienen. In diesem Fall wäre aber der in den Fig. 14 und 15 dargestellte einfache Algorithmus für die fortlaufende Erzeugung der Signale H_E nicht mehr möglich, und man müßte hierfür eine andere Lösung verwenden. Aus diesem Grund wird das beschriebene Ausführungsbeispiel bevorzugt, da es nach derzeitigem Kenntnisstand eine optimale Lösung darstellt.

Naturgemäß sind im Rahmen der vorliegenden Erfindung vielfache weitere Abwandlungen und Modifikationen möglich.

## Patentansprüche

1. Elektronisch kommutierter Motor,
mit mindestens drei Rotorstellungssensoren (37, 38, 39), welche im Bereich einer vorgegebenen Zone (75) des Rotors (35) angeordnet sind, um im Betrieb entsprechend einer dort vorgesehenen Rotorstellungsinformation digitale Rotorstellungssignale (H1, H2, H3) zu erzeugen, welche eine Kommutierung der im Stator des Motors (30) fließenden Ströme ermöglichen,
wobei jedem Kommutierungszustand des Motors (30) eine vorgegebene Kombination von Signalen (H1, H2, H3) dieser Sensoren (37, 38, 39) zugeordnet ist, welche Kombinationen zusammen eine erste Menge (K1 bis K6) von Kombinationen bilden,
mit an der vorgegebenen Zone (75) des Rotors (35) vorgesehenen Hilfsinformationen (76, 77, 78, 79; 82, 84) für die Erzeugung von Drehzahl- oder Drehstellungssignalen (I), welche Hilfsinformationen bei der Erfassung durch die Rotorstellungssensoren (37, 38, 39) außerhalb der Rotorstellungen, an denen Kommutierungsvorgänge stattfinden, zu Kombinationen von Rotorstellungssignalen führen, die zusammen eine zweite Menge (K7, K8) von Kombinationen bilden, wobei die Schnittmenge (SM) von erster Menge (K1 bis K6) und zweiter Menge (K7, K8) gleich Null ist,
und mit einer Startvorrichtung (42) zur Überwachung des Anlaufs des Motors (30), welche dazu ausgebildet ist, bei Nichtanlauf nach einer vorgegebenen Zeitspanne eine dem erfolglosen ersten Anlaufversuch zu Grunde liegende Kombination von Rotorstellungssignalen durch eine Kombination (K6) von Rotorstellungssignalen aus der ersten Menge zu ersetzen und damit einen zweiten Anlaufversuch zu unternehmen,
und nach jedem erfolglosen Startversuch die bisher verwendete Kombination von Rotorstellungssignalen aus der ersten Menge durch ihren Komplementärwert zu ersetzen und diesen Komplementärwert um mindestens eine Stelle zu verschieben, oder umgekehrt, und den so gebildeten Wert als neue Kombination aus der ersten Menge von Rotorstellungssignalen für einen nachfolgenden Anlaufversuch zu verwenden.

2. Motor nach Anspruch 1, bei welchem die Startvorrichtung (42) dann, wenn der Motor bei einem zweiten Anlaufversuch nicht anläuft, nach Ablauf einer vorgegebenen Zeitspanne die beim zweiten Anlaufversuch verwendete Kombination (K6) von Rotorstellungssignalen aus der ersten Menge durch eine dritte neue Kombination (K5) aus der ersten Menge ersetzt und damit einen dritten Anlaufversuch unternimmt.

3. Motor nach Anspruch 1 oder 2,
mit einem Mikroprozessor (42), welchem die Signale von den Rotorstellungssensoren (37, 38, 39) zuführbar sind und welcher, durch einen im Betrieb im wesentlichen fortlaufend erfolgenden Durchlauf durch eine Programmschleife (S110) kurzer zeitlicher Dauer, Änderungen in den von diesen Signalen jeweils gebildeten Signalkombinationen (H1, H2, H3) erfasst (Fig. 13: S104),
und bei jeder Änderung den logischen Wert eines vorgegebenen Ausgangsports (RA3) ändert (Fig. 13: S112),
um dort ein digitales Signal (I) zu erzeugen, dessen Frequenz der Drehzahl des Motors (30) proportional ist.

4. Motor nach Anspruch 3, bei welchem der Mikroprozessor (42) die Zeitdauer (IST) zwischen zwei aufeinanderfolgenden Änderungen des logischen Zustands des vorgegebenen Ausgangsports (RA3) als für die Drehzahl des Motors (30) charakteristischen Wert fortlaufend erfasst (Fig. 13: S108).

5. Motor nach Anspruch 4, bei welchem die Zeit für den Durchlauf durch eine Programmschleife (Fig. 13: S110) auf eine im wesentlichen konstante Zeit festgelegt ist,
und die Erfassung der Zeitdauer (IST) zwischen zwei aufeinanderfolgenden Änderungen des logischen Zustands des vorgegebenen Ausgangsports (RA3) durch Zählung der Zahl der zwischen diesen Änderungen durchlaufenen Programmschleifen erfolgt.

6. Motor nach Anspruch 5, bei welchem der Mikroprozessor (42) die fortlaufend erfasste Zeitdauer (IST) für eine Drehzahlregelung (Fig. 13: S132) des Motors (30) auswertet.

7. Motor nach einem oder mehreren der vorhergehenden Ansprüche, bei welchem die Rotorstellungsinformation an der vorgegebenen Zone (75) des Rotors (35) als Magnetisierungsmuster (75) ausgebildet ist,
und die Rotorstellungssensoren als galvanomagnetische Sensoren (37, 38, 39) zum Abtasten dieses Magnetisierungsmusters (75) ausgebildet sind.

8. Motor nach Anspruch 7, bei welchem eine Hilfsinformation mit dem Mittelbereich eines zugeordneten Rotorpols zusammenfällt, welcher Mittelbereich nicht größer als 60° el. ist.

9. Motor nach Anspruch 7 oder 8, bei welchem pro Rotorpol (71, 72, 73, 74) eine Hilfsinformation (76, 77, 78, 79) vorgesehen ist.

10. Motor nach Anspruch 9, bei welchem die Hilfsinformation während einer Rotordrehung (α) von etwa 20° el. wirksam ist.

11. Motor nach Anspruch 7, bei welchem pro Rotorpol zwei Hilfsinformationen (82, 84) vorgesehen sind.

12. Motor nach Anspruch 11, bei welchem die Hilfsinformationen (82, 84) jeweils während einer Rotordrehung von etwa 12° el. wirksam sind.

13. Motor nach Anspruch 11 oder 12, bei welchem der Abstand der beiden im Bereich eines Rotorpols (71) vorgesehenen Hilfsinformationen (82, 84) etwa 12° el. beträgt.

14. Motor nach Anspruch 7, bei welchem pro Rotorpol in einem Bereich, welcher 60° el. nicht überschreitet, N Abschnitte mit Hilfsinformationen vorgesehen sind, deren Winkelerstreckung und Abstand jeweils etwa 60° el./(2 N + 1) betragen.

15. Motor nach Anspruch 14, bei welchem die N Abschnitte mit Hilfsinformationen jeweils im wesentlichen symmetrisch zur Mitte des betreffenden Rotorpols angeordnet sind.

16. Motor nach einem oder mehreren der vorhergehenden Ansprüche, bei welchem eine Sperrvorrichtung vorgesehen ist, welche bei laufendem Motor die Kombinationen (K7, K8) von Rotorstellungssignalen der zweiten Menge von der Steuerung der Kommutierungszustände des Motors (30) ausschließt.

17. Motor nach einem oder mehreren der vorhergehenden Ansprüche, bei welchem die Rotorstellungsinformation an der vorgegebenen Zone des Rotors als Magnetisierungsmuster ausgebildet ist,
und die Hilfsinformation jeweils die Form eines Hilfspols aufweist, der eine zum umgebenden Hauptpol des Rotors umgekehrte Polarität aufweist.

18. Motor nach einem oder mehreren der vorhergehenden Ansprüche, bei welchem die mindestens drei Rotorstellungssensoren (37, 38, 39) relativ zueinander in Umfangsrichtung versetzt am Stator des Motors (30) angeordnet sind.

19. Motor nach einem oder mehreren der vorhergehenden Ansprüche, bei welchem, bezogen auf die Gesamtheit der Rotorstellungssignale (H1, H2, H3) und eine konstante Drehzahl, der Abstand zwischen ungleichnamigen, benachbarten Flanken der Gesamtheit dieser Signale im wesentlichen konstant ist.

## Claims

1. Electronically commutated motor,
with at least three rotor position sensors (37, 38, 39) which are arranged in the area of a predetermined zone (75) of the rotor (35) in order to produce digital rotor position signals (H1, H2, H3) which correspond to rotor position information provided there while in operation and allow commutation of the currents flowing in the stator of the motor (30),
whereby each commutation state of the motor (30) has associated therewith a predetermined combination of signals (H1, H2, H3) from these sensors (37, 38, 39), which combinations together form a first set (K1 to K6) of combinations,
with auxiliary information (76, 77, 78, 79; 82, 84) provided in the predetermined zone (75) of the rotor (35) for the production of rotational speed or rotational position signals (I), which auxiliary information, when detected by the rotor position sensors (37, 38, 39) outside the rotor positions in which commutation operations take place, leads to combinations of rotor position signals which together form a second set (K7, K8) of combinations, whereby the intersection set (SM) of the first set (K1 to K6) and the second set (K7, K8) is equal to zero,
and with a starting device (42) for monitoring the starting of the motor (30) and which is designed, in the event of failure to start after a predetermined period of time, to replace the combination of rotor position signals forming the basis for the unsuccessful first attempt at starting by a combination (K6) of rotor position signals from the first set and hence to make a second attempt at starting,
and, after every unsuccessful attempt at starting, to replace the combination of rotor position signals from the first set used thus far by their complementary value and to shift this complementary value by at least one place, or conversely, and to use the value so formed as a new combination from the first set of rotor position signals for a following attempt at starting.

2. Motor according to claim 1, in which the starting device (42), when the motor does not start during a second attempt at starting, after a predetermined period of time has elapsed replaces the combination (K6) of rotor position signals from the first set used during the second attempt at starting by a third new combination (K5) from the first set and thus makes a third attempt at starting.

3. Motor according to claim 1 or 2,
with a microprocessor (42) to which the signals from the rotor position sensors (37, 38, 39) can be fed and which detects changes in the signal combinations (H1, H2, H3) formed in each case from these signals by making a run through a program loop (S110) of short time duration which takes place essentially continuously while in operation (Fig. 13: S104),
and with every change alters the logic value of a predetermined output port (RA3) (Fig. 13: S112)
in order to produce there a digital signal (I) the frequency of which is proportional to the rotational speed of the motor (30).

4. Motor according to claim 3, in which the microprocessor (42) continuously detects the length of time (IST) between two successive changes in the logic state of the predetermined output port (RA3) as a value characteristic of the rotational speed of the motor (30) (Fig. 13: S108).

5. Motor according to claim 4, in which the time for the run through a program loop (Fig. 13: S110) is fixed to an essentially constant time,
and the detection of the length of time (IST) between two successive changes in the logic state of the predetermined output port (RA3) is effected by counting the number of program loops run through between these changes.

6. Motor according to claim 5, in which the microprocessor (42) evaluates the continuously detected length of time (IST) for regulation of the rotational speed (Fig. 13: S132) of the motor (30).

7. Motor according to one or more of the preceding claims, in which the rotor position information in the predetermined zone (75) of the rotor (35) takes the form of a magnetisation pattern (75),
and the rotor position sensors take the form of galvano magnetic sensors (37, 38, 39) for scanning this magnetisation pattern (75).

8. Motor according to claim 7, in which auxiliary information coincides with the middle area of an associated rotor pole, which middle area is not greater than 60% el.

9. Motor according to claim 7 or 8, in which auxiliary information (76, 77, 78, 79) is provided for each rotor pole (71, 72, 73, 74).

10. Motor according to claim 9, in which the auxiliary information is effective during a rotor rotation (α) of approximately 20° el.

11. Motor according to claim 7, in which two pieces of auxiliary information (82, 84) are provided for each rotor pole.

12. Motor according to claim 11, in which the auxiliary information (82, 84) is in each case effective during a rotor rotation of approximately 12° el.

13. Motor according to claim 11 or 12, in which the gap between the two pieces of auxiliary information (82, 84) provided in the area of a rotor pole (71) is approximately 12° el.

14. Motor according to claim 7, in which N portions with auxiliary information are provided with an angular extension and gap of in each case approximately 60° el./(2 N + 1) for each rotor pole in an area which does not exceed 60° el.

15. Motor according to claim 14, in which the N portions with auxiliary information are each arranged essentially symmetrical with the middle of the rotor pole concerned.

16. Motor according to one of more of the preceding claims, in which a locking device is provided which, while the motor is running, excludes the combinations (K7, K8) of rotor position signals of the second set from control of the commutation states of the motor (30).

17. Motor according to one or more of the preceding claims, in which the rotor position information in the predetermined zone of the rotor takes the form of a magnetisation pattern,
and the auxiliary information in each case takes the form of an auxiliary pole which has the reverse polarity to the surrounding main pole of the rotor.

18. Motor according to one or more of the preceding claims, in which the at least three rotor position sensors (37, 38, 39) are arranged offset relative to one another in the circumferential direction on the stator of the motor (30).

19. Motor according to one or more of the preceding claims, in which the gap between opposite neighbouring flanks of the entirety of these signals is essentially constant related to the entirety of the rotor position signals (H1, H2, H3) and a constant rotational speed.

## Revendications

1. Moteur à commutation électronique,
avec au moins trois capteurs de position du rotor (37, 38, 39) qui sont disposés au niveau d'une zone définie (75) du rotor (35) pour, en fonctionnement, générer en fonction d'une information de position du rotor prévue à cet endroit des signaux numériques de position du rotor numériques (H1, H2, H3) qui permettent une commutation des courants circulant dans le stator du moteur (30),
dans lequel une combinaison définie de signaux (H1, H2, H3) de ces capteurs (37, 38, 39) est associée à chaque état de commutation du moteur (30), lesquelles combinaisons forment ensemble un premier ensemble (K1 à K6) de combinaisons,
avec des informations auxiliaires (76, 77, 78, 79 ; 82, 84) prévues sur la zone définie (75) du rotor (35) pour la génération de signaux de vitesse de rotation ou de position de rotation (I), lesquelles informations auxiliaires conduisent, lors de la saisie par les capteurs de position du rotor (37, 38, 39) en dehors des positions du rotor auxquelles ont lieu des processus de commutation, à des combinaisons de signaux de position du rotor qui forment ensemble un deuxième ensemble (K7, K8) de combinaisons, l'intersection (SM) du premier ensemble (K1 à K6) et du deuxième ensemble (K7, K8) étant nulle,
et avec un dispositif de démarrage (42) pour la surveillance du démarrage du moteur (30) qui est conçu pour, en cas de non-démarrage après un laps de temps défini, remplacer une combinaison de signaux de position du rotor prise comme base pour la première tentative de démarrage infructueuse par une combinaison (K6) de signaux de position du rotor du premier ensemble et entreprendre avec elle une deuxième tentative de démarrage,
et, après chaque tentative de démarrage infructueuse, remplacer la combinaison de signaux de position du rotor du premier ensemble utilisée jusque-là par sa valeur complémentaire et décaler cette valeur complémentaire d'au moins une position, ou inversement, et utiliser la valeur ainsi formée comme nouvelle combinaison du premier ensemble de signaux de position du rotor pour une tentative de démarrage suivante.

2. Moteur selon la revendication 1, dans lequel, si le moteur ne démarre pas lors d'une deuxième tentative de démarrage, le dispositif de démarrage (42) remplace, après expiration d'un laps de temps défini la combinaison (K6) de signaux de position du rotor du premier ensemble utilisée pour la deuxième tentative de démarrage, par une troisième nouvelle combinaison (K5) du premier ensemble et entreprend avec elle une troisième tentative de démarrage.

3. Moteur selon la revendication 1 ou 2,
avec un microprocesseur (42) auquel peuvent être fournis les signaux des capteurs de position du rotor (37, 38, 39) et qui saisit, par l'exécution essentiellement permanente en fonctionnement d'une boucle de programme (S110) de courte durée, les modifications dans les combinaisons de signaux (H1, H2, H3) formées par ces signaux (fig. 13 : S104), et qui, à chaque modification, change la valeur logique d'un port de sortie défini (RA3) (fig. 13 : S112),
pour y générer un signal numérique (I) dont la fréquence est proportionnelle à la vitesse de rotation du moteur (30).

4. Moteur selon la revendication 3, dans lequel le microprocesseur (42) saisit en permanence la durée (IST) entre deux modifications successives de l'état logique du port de sortie défini (RA3) en tant que valeur caractéristique de la vitesse de rotation du moteur (30) (fig. 13 : S108).

5. Moteur selon la revendication 4, dans lequel le temps d'exécution d'une boucle de programme (fig. 13 : S110) est fixé à un temps essentiellement constant,
et la saisie de la durée (IST) entre deux modifications successives de l'état logique du port de sortie défini (RA3) est réalisée par comptage du nombre de boucles de programme exécutées entre ces modifications.

6. Moteur selon la revendication 5, dans lequel le microprocesseur (42) évalue la durée (IST) saisie en permanence pour une régulation de vitesse (fig. 13 : S132) du moteur (30).

7. Moteur selon l'une ou plusieurs des revendications précédentes, dans lequel l'information de position du rotor sur la zone définie (75) du rotor (35) est conçue comme un motif de magnétisation (75),
et les capteurs de position du rotor sont conçus comme des capteurs galvanomagnétiques (37, 38, 39) pour la détection de ce motif de magnétisation (75).

8. Moteur selon la revendication 7, dans lequel une information auxiliaire coïncide avec la zone centrale d'un pôle de rotor associé, laquelle zone centrale n'est pas plus grande que 60° él.

9. Moteur selon la revendication 7 ou 8, dans lequel il est prévu une information auxiliaire (76, 77, 78, 79) par pôle de rotor (71, 72, 73, 74).

10. Moteur selon la revendication 9, dans lequel l'information auxiliaire est active pendant une rotation de rotor (α) d'environ 20° él.

11. Moteur selon la revendication 7, dans lequel il est prévu deux informations auxiliaires (82, 84) par pôle de rotor.

12. Moteur selon la revendication 11, dans lequel les informations auxiliaires (82, 84) sont actives chacune pendant une rotation de rotor d'environ 12° él.

13. Moteur selon la revendication 11 ou 12, dans lequel la distance entre les deux informations auxiliaires (82, 84) prévues au niveau d'un pôle de rotor (71) est d'environ 12° él.

14. Moteur selon la revendication 7, dans lequel il est prévu par pôle de rotor, dans une plage ne dépassant pas 60° él., N sections d'informations auxiliaires dont l'étendue angulaire et la distance sont chacune égales à 60° él./(2 N + 1).

15. Moteur selon la revendication 14, dans lequel les N sections d'informations auxiliaires sont disposées chaque fois de manière essentiellement symétrique par rapport au centre du pôle de rotor concerné.

16. Moteur selon l'une ou plusieurs des revendications précédentes, dans lequel il est prévu un dispositif de blocage qui exclut les combinaisons (K7, K8) de signaux de position du rotor du deuxième ensemble de la commande des états de commutation du moteur (30) lorsque le moteur tourne.

17. Moteur selon l'une ou plusieurs des revendications précédentes, dans lequel l'information de position du rotor sur la zone définie du rotor est conçue comme un motif de magnétisation,
et l'information auxiliaire présente chaque fois la forme d'un pôle auxiliaire qui présente une polarité inverse de celle du pôle principal du rotor environnant.

18. Moteur selon l'une ou plusieurs des revendications précédentes, dans lequel les au moins trois capteurs de position du rotor (37, 38, 39) sont décalés les uns par rapport aux autres en direction circonférentielle sur le stator du moteur (30).

19. Moteur selon l'une ou plusieurs des revendications précédentes, dans lequel, par rapport à l'ensemble des signaux de position du rotor (H1, H2, H3) et à une vitesse de rotation constante, la distance entre des flancs voisins de sens inverse de l'ensemble de ces signaux est essentiellement constante.
